# EUROPEAN PATENT APPLICATION

(11) **EP 2 330 324 A1**
(43) Date of publication of application: **08.06.2011**
(21) Application number: 09178198.9
(22) Date of filing: 07.12.2009
(51) Int. Cl.: F16J 15/46, H02K 5/124

(54) **Security improved sealed electric machine**

(71) Applicant: Alstom Technology Ltd, 5400 Baden (CH)
(72) Inventor: Langenbacher, Klaus, D-67366 Weingarten (DE)

(57) **Abstract**

The security improved sealed electric machine comprises a casing (2) housing a stator (3) and a rotor (4) supported by a rotor shaft (5) coming out from the casing (2). Between the casing (2) and the rotor shaft (5) seal rings (7) are provided for sealing the casing interior against the outer environment. The machine also comprises emergency seal rings (10) between the casing (2) and the rotor shaft (5) that may assume a deactivated configuration during normal operation of the electric machine and an activated configuration in case of failure of the seal rings (7).

## Description

### TECHNICAL FIELD

The present invention relates to a security improved sealed electric machine; in particular the present invention refers to a large sealed electric generator.

### BACKGROUND OF THE INVENTION

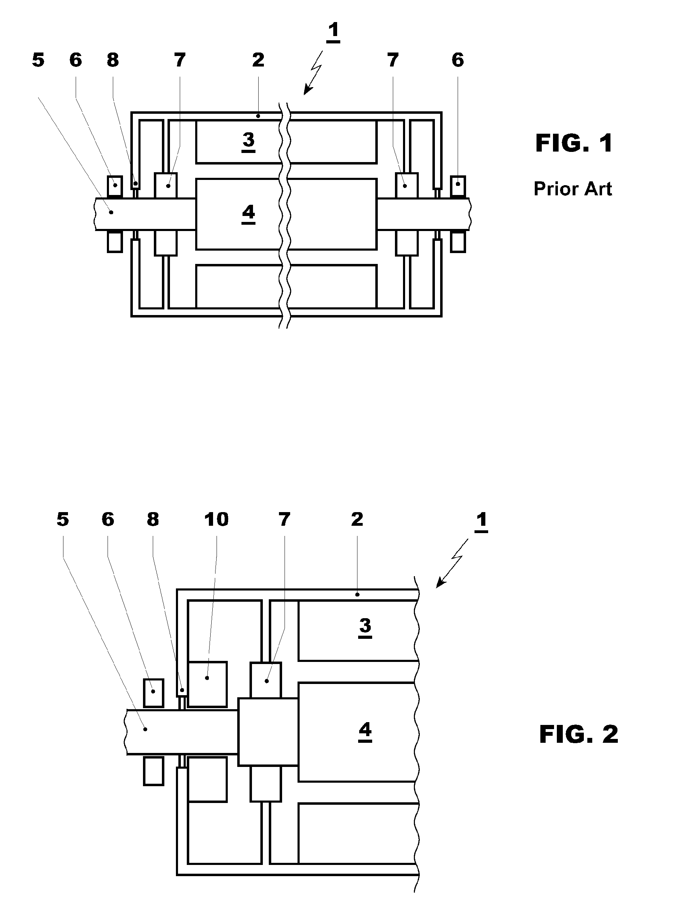

With reference to figure 1, sealed electric generators 1 are known to comprise a casing 2 housing a stator 3 and a rotor 4 supported by a rotor shaft 5 via bearings 6.

In addition, in order to seal the inner of the casing 2 against the outer environment, seal rings 7 (one at the driven end and another at the non driven end of the rotor shaft 5) are provided between the casing 2 and the rotor shaft 5.

Moreover, typically vipers 8 are provided between the bearings 6 and seal rings 7, to contribute to the sealing effect.

The seal rings 7 are connected to a supply circuit (not shown) that feeds oil therein such that sealing is guaranteed.

Nevertheless, in case a problem at the seal ring supply circuit occurs, sealing cannot be guaranteed anymore and the gas contained inside of the casing 2 partly enters the seal rings and the supply circuit and usually reaches an oil collection chamber of the supply circuit, and partly is discharged via the vipers 8 to the outside of the casing 2.

Since typically the gas contained inside of the casing 2 is H₂, very dangerous explosive mixtures may generate.

### SUMMARY OF THE INVENTION

The technical aim of the present invention is therefore to provide a security improved sealed electric machine by which the said problems of the known art are eliminated.

Within the scope of this technical aim, an aspect of the invention is to provide a machine whose operation is secure also in case of failure of the seal rings and/or seal ring supply circuit, because formation of explosive mixtures (such as H₂/air mixtures) is prevented.

The technical aim, together with these and further aspects, are attained according to the invention by providing a machine in accordance with the accompanying claims.

### BRIEF DESCRIPTION OF THE DRAWINGS

Further characteristics and advantages of the invention will be more apparent from the description of a preferred but non-exclusive embodiment of the machine according to the invention, illustrated by way of nonlimiting example in the accompanying drawings, in which:
Figure 1 is a schematic view of a traditional electric machine such as a large electric generator;
Figure 2 is a partial schematic view of an electric machine such as a large electric generator in an embodiment of the invention;
Figures 3 and 4 show a particular of the machine with an emergency seal ring in an embodiment of the invention respectively activated and deactivated; and
Figures 5 and 6 show two different embodiments of emergency seal rings.

### DETAILED DESCRIPTION OF THE INVENTION

The security improved sealed electric machine has some features in common with traditional sealed electric machines, for this reason like reference numerals already used with reference to traditional electric machines are used to refer to like elements throughout.

The sealed electric machine 1 comprises a casing 2 housing a stator 3 and a rotor 4 supported by a rotor shaft 5 coming out from the casing 2.

Between the casing 2 and the rotor shaft 5 seal rings 7 are provided for sealing the casing interior against the outer environment.

These seal rings 7 are preferably usual seal rings, such as for example single, double or also triple circuit seal rings; it is anyhow clear that seal rings may also be different from the particular type of seal rings cited.

In addition, also bearings 6 for supporting the rotor shaft 5 and vipers 8 contributing to the sealing are provided; vipers 8 are provided between the bearings 6 and the seal rings 7.

Advantageously, emergency seal rings 10 are provided between the casing 2 and the rotor shaft 5 that may assume a deactivated configuration or an activated configuration.

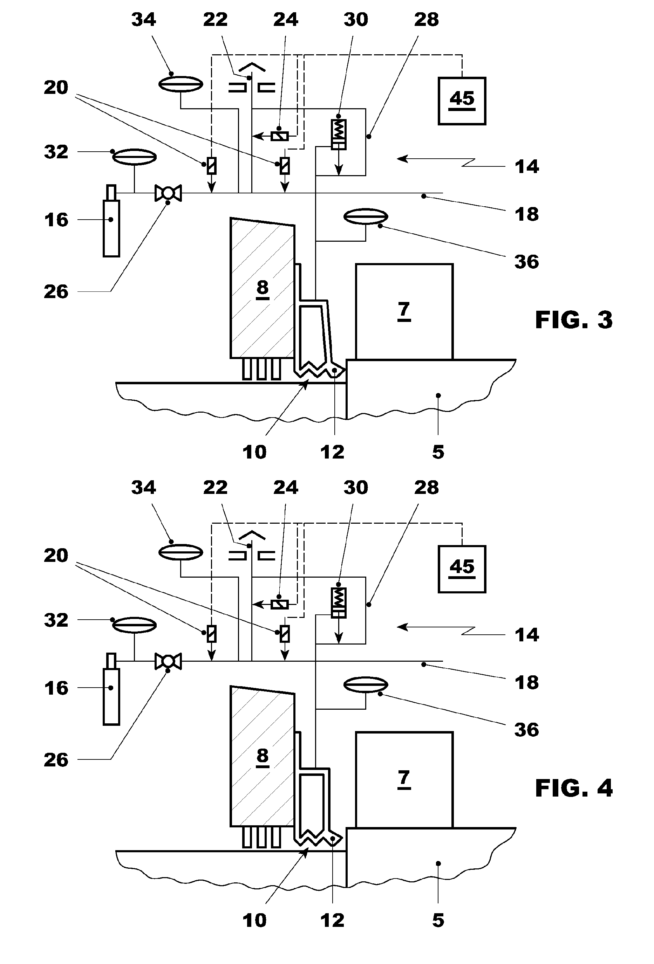

In particular, during normal operation of the electric machine the emergency seal rings 10 assume a deactivated configuration (shown for example in figure 4), such that during normal operation the emergency seal rings are not operative and do not carry out any sealing effect and do not affect the electric machine operation.

In contrast, in case of failure of the seal rings 7 (i.e. if a failure at the seal rings that during normal operation guarantee the sealing occurs), the emergency seal rings 10 may assume an activated configuration (shown for example in figure 3), in which they are operative and guarantee the sealing in addition or instead of the seal rings 7.

In particular, two emergency seal rings 10 are provided, each located at one of the rotor shaft ends.

As shown in the figures, the emergency seal rings 10 may be connected to the vipers 8.

The emergency seal rings 10 have a part 12 that, when the ring 10 is activated, can be moved against the rotor shaft 5 to realise the sealing.

An emergency seal circuit 14, arranged to supply a pressurised gas that causes the movable part 12 to move against the rotor shaft 5, is provided.

The emergency seal circuit 14 comprises a tank 16 (such as a pressurised bottle filled with N₂ or argon at 40 bar or higher pressure) containing the pressurised gas and a pipe 18 connecting the tank 16 to the emergency seal rings 10 (figures 3 and 4 only show one seal ring, nevertheless it is clear that a second seal ring is connected at the end of the pipe 18).

Moreover, control valves 20 are provided on the pipe 18, in order to control the gas supply to the emergency seal rings 10; control valves 20 are for example solenoid activated valves connected to the plant battery.

In particular, the control valves 20 are two in number and a discharge branch 22 is connected to the pipe 18 between the two control valves 20; the discharge branch 22 is arranged to discharge to the outside of the pipe 18 gas that could leakage through the valve 20 facing the tank 16.

A further control valve 24 is provided on this discharge branch 22; also valve 24 preferably is a solenoid activated valve connected to the plant battery.

Preferably control valves 20 are solenoid valves having an open configuration without energy supply, and the further control valve 24 is a solenoid valve having a closed configuration without energy supply. These valves let the system be activated in case a failure occurs and they do not receive any electric power supply.

If the configuration so requires a pressure reducing valve 26 may also be provided between the tank 16 and the control valves 20.

Moreover, also a safety discharge branch 28 connected to a portion of the pipe 18 downstream of the control valves 20 is provided; also this safety discharge branch 28 is provided with a safety valve 30.

In addition, pressure sensors 32, 34 and 36 are provided respectively between the tank 16 and the control valves 20, between the two control valves 20 and downstream of the two control valves 20.

These pressure sensors 32, 34, 36 let the system be monitored and the valves 24 and 30 and be driven in case of leakages at the control valve 20 facing the tank 16 or if the pressure in the pipe 18 overcome a security value.

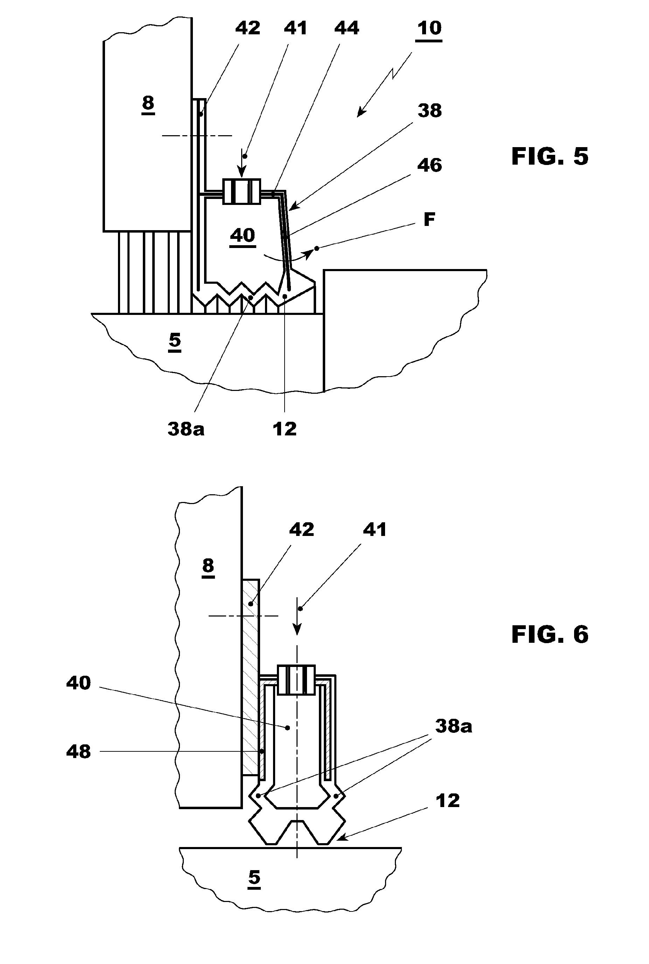

Figure 5 shows an embodiment of the emergency seal rings 10.

The emergency seal rings 10 have an annular hollow body 38 defining a chamber 40 and the movable part 12.

The chamber 40 is arranged to receive the gas 41 coming from the tank 16 to cause the movable part 12 to be activated and to be moved towards the rotor shaft 5.

In particular, the body 38 is made of a deformable material such as an elastomeric material and has a part 38a towards the rotor shaft 5 with an accordion like structure.

The other sides include a reinforcing structure made of metal plates, for example made of steel, embedded therein.

In this respect, metal plates 42, 44 are embedded in the side facing the vipers 8 and the side opposite the accordion like part 38a; these metal plates are connected each other, for example welded.

A further metal plate 46 is embedded in the side opposite the vipers 8; this plate 46 is connected to the metal plate 44 (for example it is welded to the plate 44 or the plates 44 and 46 are manufactured in one piece) and defines a spring element that rotates as shown by arrow F when the pressurised gas 41 is introduced into the chamber 40, and moves back to its reset position when the chamber 40 is depressurised.

Thus, when the metal plate 46 rotates as indicated by the arrow F, the movable part 12 is axially pressed against the rotor shaft 5.

Figure 6 shows a different embodiment of the emergency seal rings that lets the movable part 12 be radially moved against the rotor shaft 5.

This emergency seal ring is similar the embodiment already described with reference to figure 5; in particular it has a metal plate structure 48 embedded in an annular hollow body 38 defining the chamber 40 and the movable part 12.

The body 38 is made of a deformable material such as an elastomeric material and has parts 38a towards the rotor shaft 5 with an accordion like structure, that lets the body radially deform and the movable part 12 radially press against the rotor shaft 5 when pressurised gas is introduced into the chamber 40.

The operation of the machine of the invention is apparent from that described and illustrated and is substantially the following.

During normal operation the control valves 20 are closed and the further control valve 24 is open; the emergency seal rings are deactivated and do not carry out any sealing effect.

This lets possible leakages at the control valve 20 facing the tank 16 be discharged via the discharge branch 22.

In case a failure occurs such that no oil or only a reduced amount of oil in supplied into the seal rings 7 (and thus the sealing effect of the seal rings 7 is reduced) an automatic control system 45 drives the control valves 20 to open, and the further control valve 24 to close.

In this configuration gas (such as for example high pressure N₂ contained in the tank 16) is supplied (eventually at a reduced pressure via pressure reducing valve 26) into the pipe 18 and, thus into the chambers 40 of each emergency seal rings 10.

When in the chambers 40 (embodiment of figure 5), the high pressure gas makes the side of the body 38 having the metal plate 46 embedded therein to rotate as shown by arrow F and the movable part 12 to axially move towards the rotor shaft 5 (in the embodiment of figure 5).

Alternatively (embodiment of figure 6), when in the chambers 40, the high pressure gas 41 makes the accordion like structure 38a to extend and the movable portion 12 to radially move towards the rotor shaft 5.

The emergency seal rings then stay in the activated configuration as long as the generator is running out and in safe configuration (i.e. after is has been purged with CO₂ or N₂).

With the security improved sealed electric machine of the invention costs reduction are possible by reducing the availability time for the power station battery.

Naturally the features described may be independently provided from one another.

In practice the materials used and the dimensions can be chosen at will according to requirements and to the state of the art.

### REFERENCE NUMBERS

- 1: electric machine
- 2: casing
- 3: stator
- 4: rotor
- 5: rotor shaft
- 6: bearings
- 7: seal rings
- 8: vipers
- 10: emergency seal rings
- 12: movable part of 10
- 14: emergency seal circuit
- 16: tank
- 18: pipe
- 20: control valves
- 22: discharge branch
- 24: further control valve
- 26: pressure reducing valve
- 28: safety branch
- 30: safety valve
- 32, 34, 36: pressure sensors
- 38: body of 10
- 38a: part of 38
- 40: chamber of 10
- 41: gas
- 42, 44, 46: metal plates
- 45: automatic control system
- 48: metal plate structure
- F: arrow

## Claims

1. Security improved sealed electric machine comprising a casing (2) housing a stator (3) and a rotor (4) supported by a rotor shaft (5) coming out from the casing (2), wherein between the casing (2) and the rotor shaft (5) seal rings (7) are provided for sealing the casing interior against the outer environment, **characterised by** comprising emergency seal rings (10) between the casing (2) and the rotor shaft (5) that may assume a deactivated configuration during normal operation of the electric machine and an activated configuration in case of failure of the seal rings (7).

2. Electric machine as claimed in claim 1, **characterised by** comprising two emergency seal rings (10), each located at one of the rotor shaft ends.

3. Electric machine as claimed in claim 2, **characterised in that** each of said emergency seal rings (10) has at least a part (12) that, when the emergency seal ring is activated, can be moved against the rotor shaft (5) to realise the sealing.

4. Electric machine as claimed in claim 3, **characterised by** comprising an emergency seal circuit (14) arranged to supply a pressurised gas that causes the movable part (12) to move against the rotor shaft (5).

5. Electric machine as claimed in claim 4, **characterised in that** said emergency seal circuit (14) comprises at least a tank (16) containing the pressurised gas and a pipe (18) connecting the tank (16) to the emergency seal rings (10), at least a control valve (20) being provided on said pipe (18), in order to control the gas supply to the emergency seal rings (10).

6. Electric machine as claimed in claim 5, **characterised by** comprising two control valves (20) and, in addition, a discharge branch (22) connected to the pipe (18) between the two control valves (20) and arranged to discharge gas to the outside of the pipe (18), a further control valve (24) being provided on said discharge branch (22).

7. Electric machine as claimed in claim 6, **characterised by** comprising pressure reducing valve (26) between the tank (16) and the control valves (20).

8. Electric machine as claimed in claim 7, **characterised by** comprising safety discharge branch (28) connected to a portion of said pipe (18) downstream of the control valves (20) and provided with a safety valve (30).

9. Electric machine as claimed in claim 7, **characterised in that** said emergency seal rings (10) have an annular hollow body (38) defining a chamber (40) and the movable part (12), wherein the gas coming from the tank (16) can be fed into the chamber (40) to activate the movable part (12) causing it to move towards the rotor shaft (5).

10. Electric machine as claimed in claim 9, **characterised in that** the annular hollow body (38) is made of a deformable material having a reinforced structure embedded therein.

11. Electric machine as claimed in claim 10, **characterised in that** a part (38a) of the hollow annular body (38) facing the rotor shaft (5) has an accordion like structure and the reinforcing structure is embedded in the other sides of the hollow annular body (38).

12. Electric machine as claimed in claim 5, **characterised by** comprising an automatic control system (45) that drives the control valves (20) to open if a failure at the seal rings occurs.

13. Electric machine as claimed in claim 6 and 12, **characterised in that** the automatic control system (45) also drives the further control valve (24) to close if a failure at the seal rings occurs.
